# EUROPÄISCHE PATENTSCHRIFT

(11) **EP 1 634 669 B1**
(45) Veröffentlichungstag und Bekanntmachung des Hinweises auf die Patenterteilung: **07.01.2009**
(21) Anmeldenummer: 05017730.2
(22) Anmeldetag: 16.08.2005
(51) Int. Cl.: B23K 3/047, B23K 1/00, B21D 1/10, B25B 13/02

(54) **Verfahren und Vorrichtung zum Rückverformen von einseitig zugänglichen Karosserieblechteilen**
Method and device for straightening one-sided accessible parts of a car body
Méthode et dispositif de redressage de parties de carrosserie d'automobile accessibles d'un seul coté

(30) Priorität: 13.09.2004 DE 102004044642
(43) Veröffentlichungstag der Anmeldung: 15.03.2006
(73) Patentinhaber: EWM Hightec Welding GmbH, 56271 Mündersbach (DE)
(72) Erfinder: Krämer, Franz, 51467 Bergisch-Gladbach (DE)
(74) Vertreter: Cohausz & Florack

(56) Entgegenhaltungen:
- DE-A1- 2 650 506
- DE-A1- 19 711 955
- DE-U1- 8 009 725
- FR-A- 2 374 102
- GB-A- 601 459
- GB-A- 2 016 340
- US-A- 2 421 184
- US-A- 2 528 361
- US-A- 5 584 415
- US-A1- 2003 159 550
- DATABASE WPI Section Ch, Week 198819 Derwent Publications Ltd., London, GB; Class M23, AN 1988-129003 XP002358613 -& JP 63 071345 A (TOYOTA JIDOSHA KK) 31. März 1988 (1988-03-31)

## Beschreibung

Die Erfindung betrifft ein Verfahren zum Rückverformen von einseitig zugänglichen Karosserieblechbereichen gemäß dem Oberbegriff des Anspruchs 1 (siehe, z.B., FR-A-2 374 102). Darüber hinaus betrifft die Erfindung eine Vorrichtung zur Durchführung eines solchen Verfahrens gemäß dem Oberbegriff des Anspruchs 6 (siehe, z.B., FR-A-2 374 102).

Beim Rückverformen, in der Umgangssprache auch als "Ausbeulen" bezeichnet, wird eine verformte Blechpartie eines Karosserieblechs wieder in ihre Ursprungsform zurückversetzt. Je nach Lokalität der Delle werden dabei unterschiedliche Rückverformungstechniken angewendet. Für den Fall, dass die Delle im Blech von dessen Rückseite aus bearbeitet werden kann, können Ausbeulhämmer oder ähnliche Werkzeuge eingesetzt werden. Bei doppelwandigen Karosserieteilen hingegen sind die Dellen in der Regel nur einseitig zugänglich, so dass die Rückverformung durch Herausziehen der Delle stattfinden muss.

Aus "Fahrzeugtechnik, Karosserie- und Fahrzeugbau, Technologie", 2. überarbeitete Auflage 2002, Verlag Handwerk und Technik - Hamburg, Seiten 450 f. ist es bekannt, dass einseitig zugängliche Dellen unter Verwendung eines sogenannten Zughammers behoben werden können. Vor dem Einsatz eines solchen Zughammers werden auf den Bereich der Delle Befestigungselemente in Form von Zugringen aufgeschweißt, wobei die Anzahl der erforderlichen Zugringe von der Größe und der Form der Delle abhängen. Die Zugringe werden entweder angepunktet oder angeschweißt. Anschließend wird ein Haken eingehängt und ein verschiebares Gewichtsstück wird gegen ein festes Griffstück geschlagen, wodurch die Delle nach außen gezogen wird. Zum Anbringen der Halterungen für den Zughammer an der Karosserie wird dabei ein Schweißgerät eingesetzt, welches nach dem Wirkprinzip des einseitigen Widerstandspunktschweißens das Befestigungselement (Unterlegscheibe, Bolzen, Zugringe) an der beschädigten Stelle anpunktet. Dies bedeutet, dass die stoffschlüssige Verbindung zwischen dem Befestigungselement und dem Blechbereich durch den Anpressdruck auf die Befestigungselemente einerseits und die hohe Stromstärke andererseits erfolgt. Daher muss der Bereich der Delle zuvor überarbeitet werden, damit er hinreichend metallisch leitend wird. Nach Durchführung der Rückverformung müssen die angebrachten Befestigungselemente wieder mechanisch entfernt werden, wodurch häufig Löcher im Blech verbleiben. Zusätzlich sind vor dem Verspachteln des Karosseriebereichs noch erhebliche Glättungsarbeiten erforderlich, weil durch den Widerstandsschweißprozess das Blech selbst aufgeschmolzen wurde.

Als Befestigungselemente sind beim Stand der Technik sowohl sogenannte Zugnägel als auch scheibenförmige Elemente bekannt. Andererseits verwendet man auch sogenannten Welldraht oder Zugadapter, die mittels MAG-Schweißen aufgebracht werden.

Aus der FR-A-2 374 102 ist ein Verfahren und eine Vorrichtung zur Rückverformung einer konkaven Verformung an einem einseitig zugänglichen Karosserieblech bekannt. Dabei wird ein vorzugsweise rechteckiger Metallstreifen, an dem ein Zugelement angeschlossen ist, zunächst an die Form der rückzuformenden Delle angepasst, dann auf die rückzuformende Delle so aufgelegt, dass beide eine große Kontaktfläche bilden und anschließend beide mittels eines Zinnlötverfahrens so verbunden, dass sich das flüssige Zinn unter dem Metallstreifen großflächig verteilt. Der Metallstreifen kann Lochungen aufweisen, durch die der Zinndraht zum Karosserieblech geführt und dort aufgeschmolzen und in der großen Kontaktfläche verteilt wird.

Durch den Einsatz des Zinnlötverfahrens wird die Gefahr des Einreißens des Karosserieblechs beim Rückverformen gemindert bzw. entfällt das nachträgliche Abschleifen der Ziehdrahtköpfe vom Karosserieblech. Dagegen erfordert das Zinnlötverfahren einen ausreichend großen Lötbereich mit einer großen Kontaktfläche zwischen dem Metallstreifen und der rückzuformenden Delle, um die für die Rückverformung notwendigen Kräfte aufbringen zu können. Dies bedingt zusätzliche Arbeitsgänge, wie das Anpassen des Metallstreifens an die Form der Delle, das zusätzliche Auffangen von flüssigem Zinn während des Lötprozesses oder das erneute Erwärmen des Metallstreifens, um den Zinn nach der Rückverformung wieder vom Karosserieblech entfernen zu können.

Die zu verlötenden Metalle werden vorzugsweise mittels einer Heizzange auf Arbeitstemperatur gebracht, indem vorzugsweise das Zugelement erwärmt wird und die Wärme auf das Karosserieblech und das Zinnlot indirekt geleitet werden. Dies bedingt einen größeren Zeitaufwand für das ausreichende Erwärmen der zu verbindenden Metalle und erfordert aufgrund der großen Wärmeeinflusszone einen größeren Energiebedarf zum Erwärmen.

Des Weiteren ist aus der GB 2 016 340 A eine Vorrichtung zum Festschweißen eines Ziehdrahtes zur Rückverformung von Einbeulungen an einem einseitig zugänglichen Karosserieblech durch ein herkömmliches Schutzgasschweißgerät, wie ein Lichtbogenschweißgerät, bekannt. In Folge der hohen Wärmeeinbringung während des Schweißens kommt es hierbei jedoch zu einer nachteiligen Gefügeveränderung im Karosserieblech und muss der festgeschweißte Ziehdraht nach der Rückverformung aufwändig wieder entfernt werden.

Schließlich ist in der GB 601 459 das Bolzenschweißen zum Verbinden eines Bolzens an einer Platte beschrieben worden. Dabei greifen Spannbacken eines Schweißgerätes das Bolzengewinde. Anschließend wird eine Verbindungsfeder auf die Spannbacken des Schweißgerätes aufgesteckt und auf der zweiten Seite der Feder eine Hülse aufgesteckt, die während des Schweißprozesses an dem unteren Ende des anzuschweißenden Bolzens anliegt und auf der Platte, an der der Bolzen befestigt werden soll, aufliegt. Die Hülse besteht aus Porzellan oder einem anderen hitzebeständigen Werkstoff und dient insbesondere der Abschirmung des Bolzenendbereichs während des Schweißens.

Diese Aufgabe wird erfindungsgemäß dadurch gelöst, dass die Befestigung des mindestens einen Befestigungselementes in dem mit einer Delle versehenen Blechbereich mittels eines Lötprozesses erfolgt, wobei als Zusatzwerkstoff für den Fügeprozeß ein Lot verwendet wird, welches in eine im wesentlichen zentrische, dem Blechbereich zugewandte Öffnung im Befestigungselement geleitet und dort zur Herstellung der Fügeverbindung aufgeschmolzen wird.

Die Erfindung ist durch ein Verfahren gemäß Anspruch 1 definiert.

Durch die Verwendung eines Lötprozesses gemäß der Erfindung ist der Festigkeitsverlust im Blechbereich gering und die Gefahr, dass das Karosserieblech bei der Rückverformung einreißt, wird herabgesetzt. Eine weiterer Vorteil besteht darin, dass nach der Rückverformung das Befestigungselement in einfacher Weise, beispielsweise durch Abscheren, vom Blechbereich entfernt werden kann und dass der verbleibende Bereich nur noch vergleichsweise wenig nachbearbeitet werden muss. Es erfolgt nämlich bei der erfindungsgemäßen Lösung kein Aufschmelzen des deformierten Blechbereichs selber, sondern durch den Lichtbogen wird das Blech lediglich erwärmt und bewirkt mit dem flüssigen Lot eine Verbindung des deformierten Bereichs mit dem Befestigungselement. Nach dessen Entfernung ist aufgrund der glatteren Oberfläche daher eine wesentlich leichtere Nachbehandlung möglich.

Die erfindungsgemäße Lösung für den Fügeprozess ist ein Lötprozess, bei dem der Zusatzstoff ein Lot, vorzugsweise aber nicht ausschließlich ein solches mit einer Schmelztemperatur von weniger als 1000 Grad Celsius, ist.

Eine weitere vorteilhafte Ausgestaltung des Verfahrens sieht vor, dass der Durchmesser der Öffnungen im Befestigungselement proportional zur Dicke des Karosserieblechs angepasst ist. Dies bedeutet, dass sich eine hohe Flexibilität ergibt, so dass eine unterschiedliche Blechdicke nur dadurch berücksichtigt werden muss, dass Befestigungselemente mit entsprechend angepassten Öffnungen Verwendung finden.

Eine weitere vorteilhafte Variante des erfindungsgemäßen Verfahrens sieht vor, dass die Zuführung des Zusatzwerkstoffes durch eine den Brenner des Lichtbogenschweißgerätes mit dem Befestigungselement verbindende Adapterhülse erfolgt. Die Adapterhülse weist zum einen den Vorteil auf, dass durch sie der Zusatzwerkstoff vom Schweißgerät zum Ort der Verbindung geführt werden kann und zum anderen hierdurch das ansonsten erforderliche "Schweißschild" ersetzt werden kann, weil die metallische Wandung des Adapters den Lichtbogen nach außen abdeckt.

Die Erfindung ist weiter durch eine Vorrichtung gemäß Anspruch 6 definiert.

Vorteilhafte Ausführungsformen einer Vorrichtung zur Durchführung des erfindungsgemäßen Verfahrens sind in den Ansprüchen 7 bis 8 gekennzeichnet.

Die Erfindung wird im Folgenden anhand einer ein Ausführungsbeispiel darstellenden Zeichnung näher erläutert. Dabei zeigen
- Figur 1:: eine Zusammenstellungszeichnung/ Querschnittszeichnung einer Vorrichtung zur Durchführung des erfindungsgemäßen Verfahrens;
- Figur 2:: einen Querschnitt und eine Ansicht eines Zugankerelements zum Aufsetzen auf ein nach dem erfindungsgemäßen Verfahren verarbeitetes Befestigungselement und
- Figur 3:: ein Werkzeug zum Abscheren eines Befestigungselements das nicht ein Teil der Erfindung darstellt.

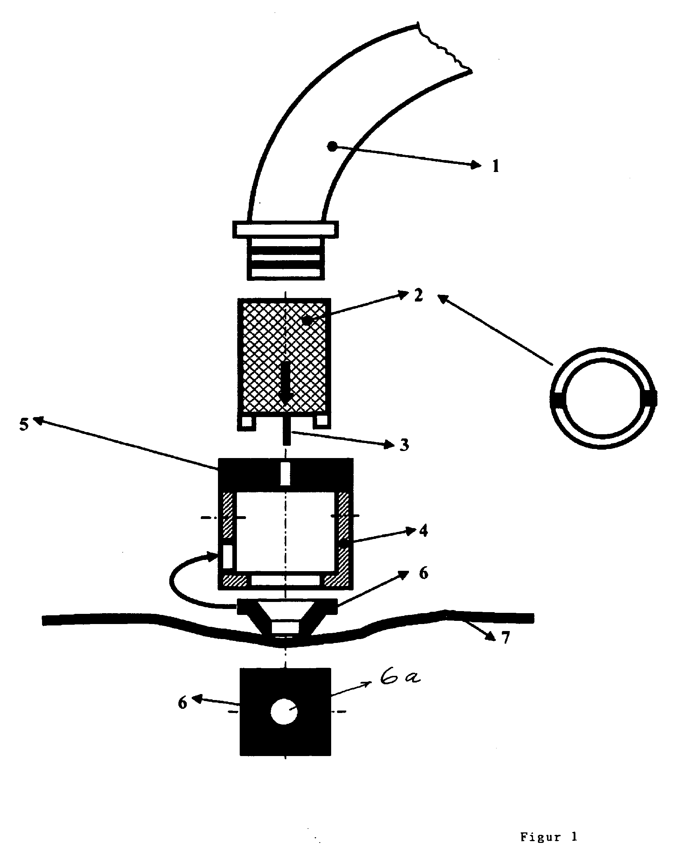

Figur 1 zeigt den Hals 1 eines nicht dargestellten Schweißbrenners, an dessen unterem Ende eine Gasdüse 2 angebracht ist, welche speziell zur Durchführung eines Punktschweißverfahrens modifiziert ist. Zentrisch in der Gasdüse 2 ist eine Drahtelektrode 3 geführt. An der Unterseite der Gasdüse 2 ist über einen federnden Haltering 5 eine hülsenförmige Adapteranordnung 4 formschlüssig angebracht, welche ebenfalls zentrisch die Drahtelektrode 3 umgibt.

Die Adapteranordnung 4 weist im Bereich ihrer Unterseite eine seitliche Öffnung auf, durch die - durch die Pfeilrichtung dargestellt - ein noch zu beschreibendes Befestigungselement 6 eingelegt werden kann. Das Befestigungselement 6 weist die unten in Figur 1 dargestellte im Wesentlichen quadratische Form auf und beinhaltet eine trichterförmige Öffnung 6a.

Nach dem Einlegen des Befestigungselements 6a über die seitliche Öffnung in die Adapteranordnung 4 liegt die Unterseite des Befestigungselements 6 mit der Öffnung 6a auf einem Blech 7 auf, welches, wie in der Zeichnung dargestellt, eine Delle aufweist.

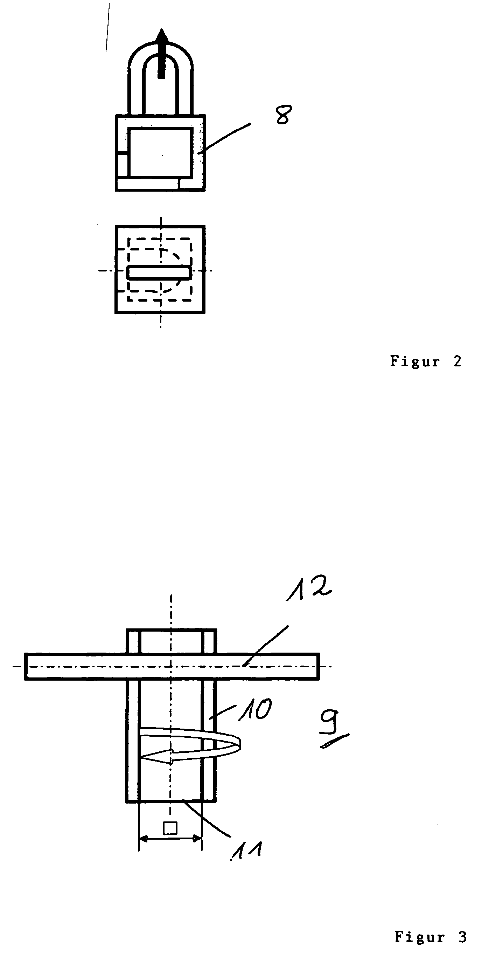

Figur 2 zeigt eine Zugankervorrichtung 8, welche so angepasst ist, dass sie mit dem Befestigungselement 6 in Wirkverbindung steht. Dazu wird der Zugadapter 8 seitlich auf das Befestigungselement aufgeschoben und kann dann anschließend in Pfeilrichtung durch Zugkraft belastet werden.

Figur 3 zeigt schließlich einen Querschnitt durch ein auf das erfindungsgemäße Verfahren angepasstes Werkzeug, welches nicht ein Teil der Erfindung darstellt, und welches im Wesentlichen aus einem rechteckförmigen länglichen Bereich 10 besteht, an dessen Unterseite sich eine rechteckförmige Öffnung 11 befindet, deren Innenwandung an die Außenperipherie des Befestigungselements 6a angepasst ist. Quer zur Zentralachse des Werkzeugs (gestrichelte Linie) befindet sich ein Handgriff 12 durch den ein Drehmoment um die gestrichelte Mittelachse des Werkzeugs 9 aufgebracht werden kann.

Das erfindungsgemäße Verfahren stellt sich nun wie folgt dar:
Unter der Annahme, dass sich in dem Blech 7 die in Figur 1 dargestellte Delle befindet, die durch Anwendung des erfindungsgemäßen Verfahrens rückverformt werden soll, wird der in Figur 1 dargestellte Schweißbrenner mit dem Brennerhals 1, der Schweißgasdüse 2, der Drahtelektrode 3, dem hülsenförmigen Adapter 4 und dem in die Adaptervorrichtung eingelegten Befestigungselement 6 an eine geeignete Stelle der Delle gebracht, so dass die Unterseite des Befestigungselements 6 das Blech berührt. Anschließend erfolgt das Auflöten des Befestigungselements 6 mittels des MIG-Lichtbogenschweißgerätes. Hierzu wird als Drahtelektrode 3 vorzugsweise aber ausschließlich ein Lot mit einer vergleichsweise niedrigen Schmelztemperatur (unter 1000 Grad Celsius) verwendet, in dem es in die Öffnung 6a des Befestigungselements 6 zugefördert wird. Der Lichtbogen erwärmt dann den unteren Teil des Befestigungselements 6 und bewirkt mit dem dann flüssigen Lot eine Verbindung des deformierten Bleches 7 mit dem Befestigungselement 6.

Nach dem Lötvorgang wird der Brenner 1 einschließlich der Düse 2 und der Adapteranordnung 4 seitlich vom Befestigungselement 6 abgezogen.

Anschließend wird der in Figur 2 dargestellte Zuganker auf das Befestigungselement 6 aufgesetzt und eine entsprechende Zugkraft in Pfeilrichtung eingeleitet. Durch die Zugkraft wird der Bereich der Delle rückverformt.

Nach der erfolgten Rückverformung wird der Zuganker 8 vom Befestigungselement 6 entfernt und das in Figur 3 dargestellte Werkzeug auf das Befestigungselement 6 aufgesetzt. Durch Betätigung des Handgriffs 12 wird das Befestigungselement 6 von dem Blechbereich durch Abscheren entfernt.

Nach dem Entfernen des Befestigungselements verbleibt ein vergleichsweise einfach zu bearbeitender Bereich der ehemaligen Delle.

## Patentansprüche

1. Verfahren zum Rückverformen von einseitig zugänglichen Karosserieblechbereichen, bei dem in einem mit einer Delle versehenen Blechbereich (7) mindestens ein Befestigungselement (6) für ein Zugmittel (8) mittels eines stoffschlüssigen Fügeverfahrens, insbesondere Schweißen oder Löten, am Blech befestigt wird, an dem Befestigungselement (6) eine der Delle entgegen gerichtete Zugkraft vom Zugmittel (8) ausgeübt wird und anschließend nach dem Entfernen des Befestigungselementes (6) der Blechbereich (7) geglättet wird und die Befestigung des mindestens einen Befestigungselementes (6) in dem mit der Delle versehenen Blechbereich (7) mittels eines Lötprozesses (1,2) erfolgt, wobei als Zusatzwerkstoff (3) für den Fügeprozeß ein Lot verwendet wird, welches in eine im wesentlichen zentrische, dem Blechbereich (7) zugewandte Öffnung (6a) im Befestigungselement (6) geleitet und dort zur Herstellung der Fügeverbindung aufgeschmolzen wird, **dadurch gekennzeichnet, dass** die Öffnung (6a) des Befestigungselements (6) trichterförmig ausgebildet ist und das Befestigungselement (6) so auf den mit der Delle versehenen Blechbereich (7) aufgesetzt wird, dass sich die Unterseite des Befestigungselements (6) mit der trichterförmigen Öffnung (6a) und der mit einer Delle versehene Blechbereich (7) berühren und durch das flüssige Lot miteinander verbunden werden, wobei der Lötprozeß mittels eines Lichtbogenschweißgerätes durchgeführt wird.

2. Verfahren nach Anspruch 1, **dadurch gekennzeichnet, dass** das Lot eine Schmelztemperatur von weniger als 1000°C hat.

3. Verfahren nach Anspruch 1, **dadurch gekennzeichnet, dass** der Durchmesser der Öffnung (6a) im Befestigungselement (6) proportional zur Dicke des Karosseriebleches (7) angepaßt ist.

4. Verfahren nach Anspruch 1, **dadurch gekennzeichnet, dass** das Entfernen des Befestigungselementes (6) vom Blechbereich durch Abscheren erfolgt.

5. Verfahren nach Anspruch 1, **dadurch gekennzeichnet, dass** die Zuführung des Zusatzwerkstoffes (3) durch eine den Brenner (1,2) des Lichtbogenschweißgerätes mit dem Befestigungselement (6) verbindende Adapterhülse (4) erfolgt.

6. Vorrichtung zur Durchführung eines Verfahrens nach einem der Ansprüche 1 bis 5 mit einem Befestigungselement (6), **dadurch gekennzeichnet, dass** sie zusätzlich ein Lichtbogenschweißgerätes mit einem Schweißbrennerhals (1) aufweist, an dem eine Punktschweißgasdüse (2) zum Löten mittels dem Lichtbogenschweißgerät befestigt ist, wobei die Öffnung (6a) des Befestigungselements (6) trichterförmig ausgebildet ist und die Unterseite des Befestigungselementes (6) mit der trichterförmigen Öffnung (6a) auf den mit der Delle versehenen Blechbereich (7) aufsetzbar ist.

7. Vorrichtung nach Anspruch 6, **dadurch gekennzeichnet, dass** an dem Schweißbrennerhals (1) bzw. an der Punktschweißgasdüse (2) eine Adapterhülse (4) formschlüssig befestigt ist.

8. Vorrichtung nach Anspruch 7, **dadurch gekennzeichnet, dass** die Adapterhülse (4) mittels eines federnden Halteringes (5) an der Punktschweißdüse (2) befestigt ist.

## Claims

1. A method for returning unilaterally accessible body sheet sections of cars to their original shapes whereby a minimum of one fastening element (6) for a pulling medium (8) is attached to the metal of a dented area (7) by means of a flush fitting bonding technique, especially welding or soldering, whereby the pulling medium (8) exerts on the fastening element (6) a pulling force in the direction away from the dent and whereby, after removal of the fastening element (6), the metal area (7) is smoothed over and whereby the attachment of the minimum of one fastening element (6) to the dented metal area (7) is effected by a soldering process (1,2) and, as additional material (3) for the bonding technique, a solder is used that is guided into an opening (6a) in the fastening element (6), such opening facing the metal area (7) in essentially centric fashion, and the solder there being melted for producing the bond, **characterized in that** the opening (6a) in the fastening element (6) is funnel-shaped and the fastening element (6) being so placed over the dented metal area (7) that the underside of the fastening element (6) with its funnel-shaped opening (6a) touches the dented metal area (7) and is bonded to it by the liquid solder, with the soldering process being carried out by means of an arc-welder.

2. A method according to claim 1 **characterized in that** the solder has a fusion temperature of less than 1000°C.

3. A method according to claim 1 **characterized in that** the diameter of the opening (6a) in the fastening element (6) is adjusted to be proportional to the thickness of the car body metal (7).

4. A method according to claim 1 **characterized in that** the removal of the fastening element (6) from the metal area is undertaken by shearing.

5. A method according to claim 1 **characterized in that** the additional material (3) is fed through an adapter sleeve (4) that connects the burner (1,2) of the arc-welder with the fastening element (6).

6. A device for carrying out a process according to one of the claims 1 to 5 with a fastening element (6) **characterized in that**, that it additionally comprises an arc-welder with a blowpipe neck (1) to which is attached a spot-welding gas nozzle (2) for soldering by means of the arc-welder, whereby the opening (6a) of the fastening element (6) is funnel-shaped and the underside of the fastening element (6) with its funnel-shaped opening (6a) can be placed over the dented metal area (7).

7. Device according to claim 6 **characterized in that** an adapter sleeve (4) is positively bonded to the blowpipe neck (1) or the spot-welding gas nozzle (2).

8. Device according to claim 7 **characterized in that** the adapter sleeve (4) is attached to the spot-welding gas nozzle (2) by means of a springy retaining ring (5).

## Revendications

1. Procédé pour refaçonner des régions de la tôle d'une carrosserie accessible d'un seul côté, lors duquel sur une région de tôle (7) présentant une bosse, on fixe sur la tôle au moins un élément de fixation (6) pour un moyen de traction (8), à l'aide d'un procédé d'assemblage par liaison de matière, notamment par soudage ou brasage, le moyen de traction (8) exerce sur l'élément de fixation (6) une force de traction opposée à la bosse, suite à quoi, après le retrait de l'élément de fixation (6), on lisse la région de tôle (7) et on procède à la fixation au moyen d'un processus de brasage (1, 2) de l'au moins un élément de fixation (6) dans la région de la tôle (7) présentant une bosse, un étain à souder, que l'on dirige dans un orifice (6a) sensiblement centré dans l'élément de fixation (6) faisant face à la région de la tôle (7) étant utilisé en tant que matière première supplémentaire (3) pour le processus d'assemblage et y étant fondu pour l'établissement de l'assemblage par aboutage,
**caractérisé en ce que** l'orifice (6a) de l'élément de fixation (6) est conçu sous forme d'entonnoir et **en ce qu'**on pose l'élément de fixation (6) sur la région de la tôle (7) présentant une bosse de sorte que la face inférieure de l'élément de fixation (6) avec l'orifice (6a) en forme de trémie et la région de la tôle (7) présentant une bosse se touchent et soient reliés ensemble par l'étain à souder liquide, le processus de brasage étant réalisé au moyen d'un appareil de soudage à l'arc.

2. Procédé selon la revendication 1, **caractérisé en ce que** l'étain à souder présente une température de fusion inférieure à 1000°C.

3. Procédé selon la revendication 1, **caractérisé en ce que** le diamètre de l'orifice (6a) dans l'élément de fixation (6) est adapté en proportion à l'épaisseur de la tôle de carrosserie (7).

4. Procédé selon la revendication 1, **caractérisé en ce que** le retrait de l'élément de fixation (6) de la région de la tôle s'effectue par cisaillement.

5. Procédé selon la revendication 1, **caractérisé en ce que** l'alimentation de matière première supplémentaire (3) s'effectue par une douille d'adaptation (4) reliant le chalumeau (1, 2) de l'appareil de soudage à l'arc avec l'élément de fixation (6).

6. Dispositif pour réaliser le procédé selon l'une quelconque des revendications 1 à 5, avec un élément de fixation (6), **caractérisé en ce qu'**il comporte en supplément un appareil de soudage à l'arc avec un col de chalumeau à souder (1), sur lequel est fixé une tuyère à gaz pour soudage par points (2) pour le brasage au moyen de ce dernier, l'orifice (6a) de l'élément de fixation (6) étant conçu en forme d'entonnoir et la face inférieure de l'élément de fixation (6) avec l'orifice (6a) en forme d'entonnoir étant susceptible de se poser sur la région de la tôle (7) présentant la bosse.

7. Dispositif selon la revendication 6, **caractérisé en ce que** sur le col du chalumeau à souder (1) ou sur la tuyère à gaz pour soudage par points (2), une douille d'adaptation (4) est fixée par complémentarité de forme.

8. Dispositif selon la revendication 7, **caractérisée en ce que** la douille d'adaptation (4) est fixée sur la tuyère pour soudage par points (2) au moyen d'une bague de retenue (5) élastique.
